# EUROPEAN PATENT APPLICATION

(11) **EP 1 903 438 A2**
(43) Date of publication of application: **26.03.2008**
(21) Application number: 07116597.1
(22) Date of filing: 17.09.2007
(51) Int. Cl.: G06F 9/445

(54) **Managing applications associated with an installation**

(30) Priority: 22.09.2006 US 525687
(71) Applicant: Hewlett-Packard Development Company, L.P., Houston, TX 77070 (US)
(72) Inventor: Smith, Virginia, Roseville, CA 95747 (US); Colathoor, Nalini, Pleasanton, CA 94588 (US); Sturdevant, Mark, Roseville, CA 95747 (US); Lee, John, Roseville, CA 95747 (US); Murray, Chrissy, San Diego, CA 92127-1899 (US); Hedge, Girish, Cupertino, CA 95014-0691 (US)
(74) Representative: Lloyd, Richard Graham

(57) **Abstract**

The present invention provides for managing applications associated with an installation. In an embodiment, instructions are received that enable an installation management system to determine how to manage an application associated with the installation. The instructions conform to an application modeling language that specifies a definition that can be used to write instructions for more than one application without requiring knowledge of the installation management system. The instructions are analyzed to enable the installation management system to determine how to manage the application.

## Description

### TECHNICAL FIELD

Embodiments of the present invention relate to managing applications. More specifically, embodiments of the present invention relate to managing applications associated with an installation.

### BACKGROUND ART

A company typically has many different types of applications for performing different types of processing. The applications are executed on computer systems that are typically networked together. The applications, the computer systems that the applications execute on and the networks that are used to communicate between the computer systems, among other things, are a part of what is commonly known as the company's "installation."

An installation may include other types of devices such as routers, firewalls and load balancers. The computer systems and the various devices are also commonly referred to as "nodes."

As the complexity of installations increases, there has been a growing need for systems that manage the installations (referred to hereinafter as "installation management systems"). An example of an installation management system is Hewlett Packard^{™}'s Openview Operations (OVO).

Examples of types of managing performed by an installation management system include, among other things, determining whether processes, nodes, or software are running, how much memory a node has, the Computer Processing Unit (CPU) utilization of the node, determining the response time of an application and taking action based on these determinations. Examples of taking action may include, among other things, adding more memory to a node, rebalancing a workload, or reconfiguring the application.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 depicts a system for managing applications associated with an installation, according to an embodiment.
Figure 2 depicts a schema for metric collection, according to an embodiment.
Figure 3 depicts a schema for scheduling tasks, according to an embodiment.
Figure 4 depicts a schema for a graph, according to an embodiment.
Figure 5 depicts a flowchart describing a method for managing applications associated with an installation, according to an embodiment of the present invention.
Figure 6 depicts a block diagram of a root schema, according to an embodiment.
The drawings referred to in this description should not be understood as being drawn to scale except if specifically noted.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the scope of the invention as defined by the appended claims. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

### OVERVIEW

Conventional installation management systems are "configured" in order to manage the devices and the applications associated with an installation. For example, a developer can create policies and templates that can be received by the conventional installation management system for the purpose of configuring it. The developer can create metric collection policies and a threshold policy, among other things, for monitoring various metrics associated with an application. The developer can also create scheduling policies that a conventional installation management system uses as a part of scheduling tasks and graph templates that a conventional installation management system uses for creating graphs of collected metrics and so on. Policies and templates are examples of what is commonly referred to as "artifacts."

There are several disadvantages to the conventional way of configuring a conventional installation management system. One, creating the artifacts requires in depth knowledge of the conventional installation management system. Two, the artifacts are specific to a particular conventional installation management system and therefore cannot be reused in the event the company decides to switch to a different conventional installation management system. Three, the interfaces that a conventional installation management system provides may have inconsistencies, which further complicates the developer's task of creating the artifacts. Four, a developer may have to perform redundant manual configuration activities in order to create the appropriate artifacts. For example, in order to monitor a specific metric, a developer may have to manually create a schedule policy, a threshold policy, a graph template, among other things, which include redundant content. For the foregoing reasons, conventional installation management systems make it difficult for developers to create consistent management solutions for different applications.

According to an embodiment, an application modeling language that includes a definition for writing instructions that enable an installation management system to determine how to manage applications associated with an installation is provided. The definition, according to an embodiment, can be used to write instructions for more than one application without requiring a developer to have knowledge of the installation management system. The application modeling language shall also be referred to as a "neutral modeling language." Since the application modeling language does not require a developer to have knowledge of the installation management system, it can be used to write instructions for more than one type of installation management system.

### INSTALLATION MANAGEMENT SYSTEMS

Examples of installation management systems include but are not limited to HP™'s OpenView Operations (OVO), HP^{™}'s OpenView Performance Manager (OVOU), and BMC^{™}'s Remedy. Other examples of different installation management systems include different versions of an installation management system such as version 6 and version 7 of HP^{™}'s Openview Operations for Unix.

HP's OpenView Operations (OVO), HP's OpenView Performance Manager (OVOU), and BMC™'s Remedy are examples of different products. Version 6 and version 7 of HP™'s Openview Operations for Unix are examples of different versions of the same product.

### APPLICATIONS

Examples of applications that can be monitored using various embodiments of the present invention include, but are not limited to, Oracle^{™} database, BEA® (Bill Edward Alfred Systems®) WebLogic Application Server, and Microsoft^{™} Exchange Server.

### A SYSTEM FOR MANAGING APPLICATIONS ASSOCIATED WITH AN INSTALLATION

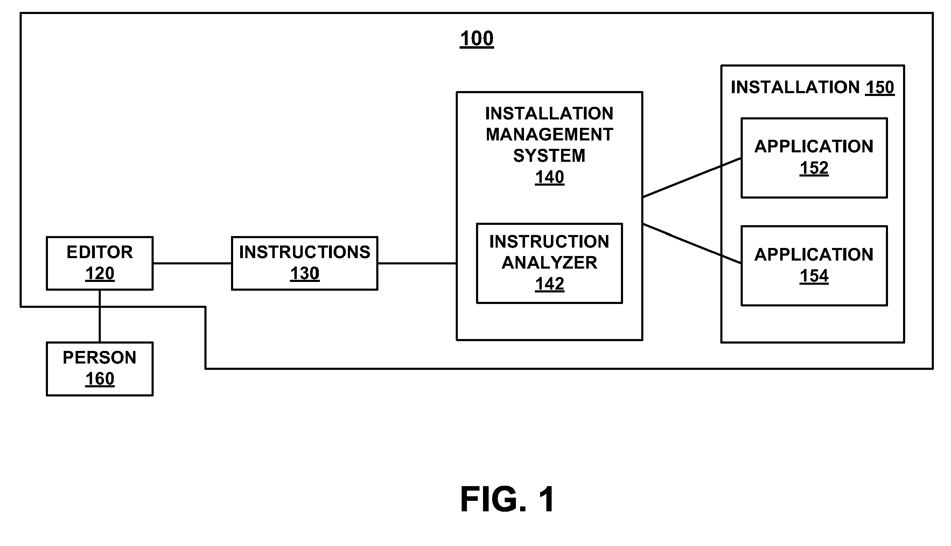

Figure 1 depicts a system for managing applications associated with an installation, according to an embodiment, which does not require knowledge of the installation management system. The blocks that represent features in Figure 1 can be arranged differently than as illustrated, and can implement additional or fewer features than what are described herein. Further, the features represented by the blocks in Figure 1 can be combined in various ways. The system 100 can be implemented using software, hardware, firmware, or a combination thereof.

Figure 1 depicts a person 160, an editor 120, instructions 130, an installation management system 140 and an installation 150. The installation management system 140 includes an instruction analyzer 142. It is appreciated that instruction analyzer 142 can reside outside the installation management system 140. The installation 150 includes, among other things, applications 152 and 154. The person 160 can be a developer. The developer 160 can use the editor 120 to write the instructions 130 which are received by the installation management system 140. The editor 120 could be, among other things, a text editor or an Extensible Markup Language (XML) editor.

According to an embodiment, the developer 120 uses an application modeling language definition, which does not require knowledge of the installation management system 140, to write the instructions 130. The definition can indicate how the developer can write instructions 130 for configuring an installation management system 140. For example, the definition may indicate that a metric can be specified, that the name of the metric can be specified, how often to obtain the value of the metric, where to obtain the value of the metric from, whether a value for a metric indicates there is a problem with the application being monitored for example by among other things specifying a threshold for the metric, and what to do if the value of the metric indicates there is a problem. The definition can also include a syntax for specifying the content. According to an embodiment, the instructions 130 are written in XML and one or more XML schemas are used to specify a definition of the application modeling language. An XML schema is an example of a non-proprietary format.

The installation management system 140 can receive instructions 130 written according to the definition. The installation management system 140 uses the instructions 130 to determine how to manage the installation 150. For example, the instruction analyzer 142 analyzes the instructions to enable the installation management system 140 to determine how to manage the installation 150.

### THE APPLICATION MODELING LANGUAGE AND DEFINITIONS

No matter what installation monitoring system 140 is used, the types of things and the way that those things are monitored will be essentially the same. For example, there are certain metrics for Oracle^{™} database that will be monitored and graphed regardless of whether the installation management system 140 is HP^{™}'s OVO or BMC^{™}'s Remedy. Therefore, according to an embodiment, configuration details that are specific to a particular installation management system 140 are handled behind the scenes. For example, a developer 160 would not need to know that OVOW uses a "Process Monitoring Policy" whereas OVOU uses a "Monitor Policy." All the developer needs to know, for example, is how they want a particular application process, such as for an Oracle^{™} database, to be monitored, according to an embodiment.

By hiding implementation specifics of configuring an installation management system 140, according to an embodiment, the application modeling language can be used for configuring more than one installation management system 140. For example, instructions 130 for monitoring Oracle^{™} database, written using various embodiments, could easily be used to configure either HP^{™}'s OVO or BMC^{™}'s Remedy

As already stated, according to an embodiment an application modeling language that includes a definition for writing instructions 130 that enable an installation management system 140 to determine how to manage applications 152, 154 associated with an installation 150 is provided. According to an embodiment, the definition is provided with one or more XML schemas and the instructions 130 are written in XML. XML is widely known by developers 160 and therefore makes it easier for developers 160 to configure installation management systems 140.

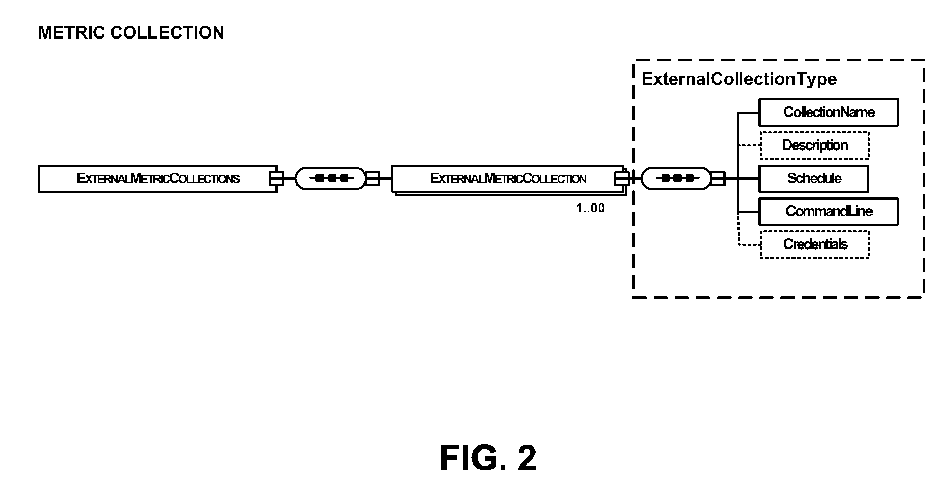

Figure 2 depicts a schema for metric collection, according to an embodiment. The metric collection schema provides information for how to write instructions 130 that specify what metric to monitor, how to monitor the metric, what to do if the value of a metric indicates there is a problem and so on. For example, the metric collection schema indicates that a name of a metric (e.g., "CollectionName"), a schedule for collecting values of the metric (e.g., "Schedule"), and a command line (e.g., "CommandLine") for collecting the metric's values can be specified. The metric collection schema also indicates that optionally a description of the metric (e.g., "Description") and that credentials (e.g., "Credentials"), such as a user password, for collecting the metric's values can be specified.

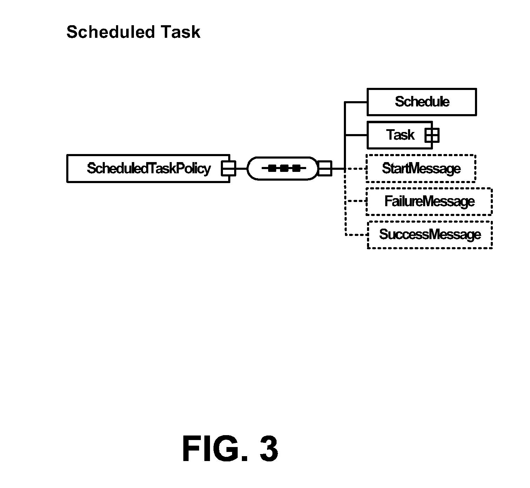

Figure 3 depicts a schema for scheduling tasks, according to an embodiment. According to an embodiment, a task is some activity that a developer 160 wants an installation management system 140 to perform on a regular schedule such as pinging a server to see if it is active or running the task every night to see if any new instances of an application server have been deployed to a device. The scheduled task schema provides information for how to write instructions 130 that specify, for example, what task to monitor, how to monitor the task and so on. For example, the scheduled task schema indicates that a name of the schedule (e.g., "Schedule") and a name of the task can be specified (e.g., "Task"). The StartMessage, FailureMessage, SuccessMessage enable the developer 160 to specify text that for example can be displayed to an operator of an installation management system 140 when a scheduled task is started, fails, or is successful.

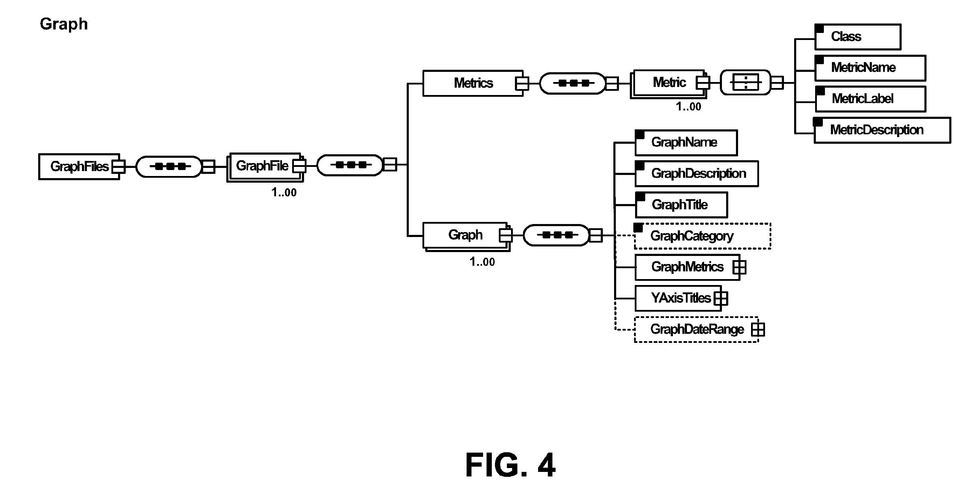

Figure 4 depicts a schema for a graph, according to an embodiment. The graph schema provides information for how to write instructions 130 that specify how a graph will appear. For example, the graph schema indicates that a class (e.g., Class), a name of a metric (e.g., MetricName), metric label (e.g., MetricLabel), and a metric description (e.g., MetricDescription) can be specified. The class refers to the "class" or a database table as defined in a database where the data that will be displayed on the graph is stored. MetricName is the name of the metric that will be graphed, the MetricLabel indicates what label to use for the metric on the graph, and MetricDescription is the description of a metric to use on the graph. More than one metric can be specified by a graph schema.

The graph schema can also be used to specify a GraphName, a GraphDescription, a GraphTitle, a GraphCategory, GraphMetrics, YAxisTitles, and GraphDateRange, according to an embodiment. GraphName is the name of the graph. GraphDescription is the description of the graph. GraphTitle is the title of the graph. GraphCategory enables organizing graphs so that they appear in "groups" for example when displayed using a user interface associated with the installation management system. GraphMetrics are the metrics to be graphed. YAxisTitles enables specification of the titles for the Y axises. GraphDateRange enables specification of ranges of dates that will appear on the graph. More than one graph can be specified by a graph schema and more than one metric can appear on a particular graph.

Frequently graphs use different background colors and colors for various lines. Further the graph may be a line graph or a bar graph, among other things. However, according to an embodiment, the graph schema does not require a developer to specify certain types of information, such as background colors, line colors, or the type of the graph, for example. It is appreciated that this can be performed by the Instruction Analyzer 142 to ensure consistency across the Installation Management System 140.

For the sake of illustration, simplified versions of schemas were depicted in Figures 2-4. More elements than what are depicted in Figures 2-4 can be associated with the schemas depicted in Figures 2-4. For example, the metric collection schema could specify a threshold, a frequency, and a source for obtaining a value for a metric. The threshold can be used for determining if the value of a metric indicates there is a problem, for example, when the value meets or exceeds the threshold. The frequency can be used for determining how often to obtain the value of the metric, for example, from the source. In another example, the scheduled task schema could specify how often the task is performed, among other things. In yet another example, the graph schema could enable a filter to be specified for filtering the graph on an instance name of the data that potentially could appear in the graph.

Further, Figures 2-4 depict just a few application modeling language definitions. There are numerous other definitions that could be implemented using various embodiments of the present invention. For example, a packaging schema could be used for writing instructions on how to package software that will be installed on a platform, such as Microsoft^{™} Windows. The packaging schema could specify what files include the software that is to be packaged, the locations of those files, and the platform the files will be installed on. In another example, there could be a schema (SNMP schema) indicating how to write instructions configuring Simple Network Management Protocol (SNMP) processing of an installation management system. For more information on schemas refer to the subheading "More information on Schemas" included hereinafter.

As already stated, with conventional installation management systems a developer may have to perform redundant manual configuration activities in order to create the appropriate artifacts. For example, in order to monitor a specific metric using a conventional installation management system, a developer may have to manually create a schedule policy, a threshold policy, a graph template, among other things, which include redundant content. However, according to an embodiment, content for configuring a particular aspect of an installation management system is specified in one place. Therefore, the developer will not have to perform redundant manual configuration activities. For example, if a policy needs information about a metric, content about that metric can be obtained from the set of instructions that were written based on the metric collection schema rather than including redundant content in a set of instructions for a policy.

### INSTRUCTIONS

For the sake of illustration, Figure 1 depicts one set of instructions 130, according to an embodiment. Different sets of instructions 130 can be used to configure an installation management system 140 to manage different applications 152, 154. Further, more than one set of instructions can be used to configure the installation management system 140 to manage different aspects of the same application, as will become more evident. For example, both the Oracle^{™} database application and Microsoft's^{™} Exchange Server have metrics that a developer 160 may want to monitor. Therefore, multiple sets of instructions 130 may be written based on the metric collection schema (Figure 2) for the various metrics.

According to an embodiment, a definition can be used to verify a set of instructions that were written based on that definition. For example, a set of instructions that were written based on the metric collection schema depicted in Figure 2 can be verified using the metric collection schema by the installation management system 140. A set of instructions is also referred to as "a model instance" or "an instance of a model."

### OPERATIONAL EXAMPLE OF A METHOD OF MANAGING APPLICATIONS ASSOCIATED WITH AN INSTALLATION

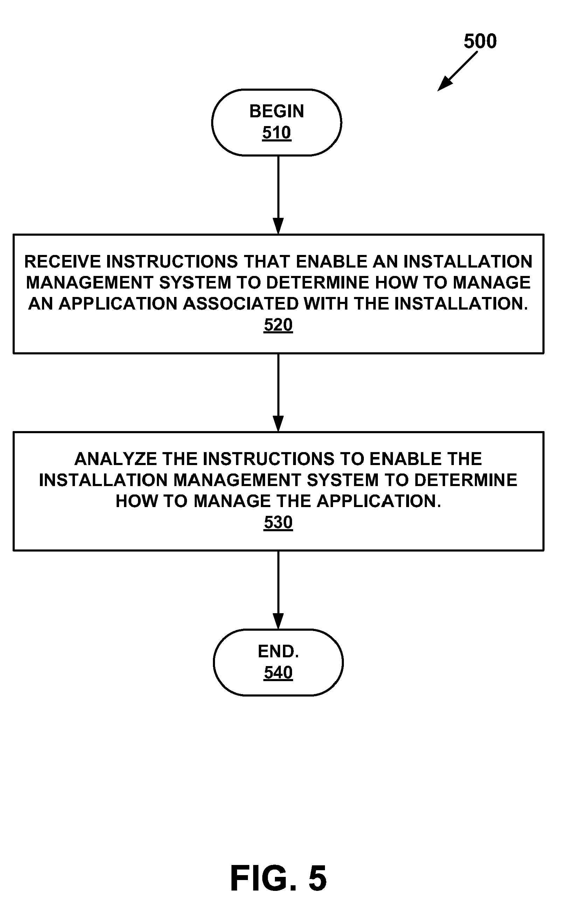

Figure 5 depicts a flowchart 500 describing a method for managing applications associated with an installation, according to an embodiment of the present invention. Although specific steps are disclosed in flowchart 500, such steps are exemplary. That is, embodiments of the present invention are well suited to performing various other steps or variations of the steps recited in flowchart 500. It is appreciated that the steps in flowchart 500 may be performed in an order different than presented, and that not all of the steps in flowchart 500 may be performed.

All of, or a portion of, the embodiments described by flowchart 500 can be implemented using computer-readable and computer-executable instructions which reside, for example, in computer-usable media of a computer system or like device. As described above, certain processes and steps of the present invention are realized, in an embodiment, as a series of instructions (e.g., software program) that reside within computer readable memory of a computer system and are executed by the processor of the computer system. When executed, the instructions cause the computer system to implement the functionality of the present invention as described below.

In step 510, the method begins.

In step 520, instructions are received that enable an installation management system to determine how to manage an application associated with the installation. The instructions 130 conform to an application modeling language that specifies a definition that can be used to write instructions 130 for more than one application 152 and 154 without requiring knowledge of the installation management system 140. The schemas depicted in Figures 2-4 are examples of definitions provided by an application modeling language that can be used to write instructions 130. Assume for the sake of illustration, that one set of instructions 130 is written for a particular metric for a particular application 152 based on the schema depicted in Figure 2 and that another set of instructions 130 is written based on the same schema (Figure 2) for another metric for that same application 152. Those two sets of instructions could be used to configure different installation management systems 140. For example those two sets of instructions could be used to configure either HP™'s OVO or BMC^{™} Remedy because the application modeling language does not require the developer 160 to have knowledge about any installation management systems 140.

The developer 160 can create the sets of instructions 130 using an editor 160. The editor 160 according to an embodiment is an XML editor and the instructions 130 are XML instructions. The installation management system 140 can receive the files that include the sets of instructions 130.

In step 530, the instructions are analyzed to enable the installation management system to determine how to manage the application. For example, the sets of instructions 130 that were received in step 520 are analyzed. Thus, the installation management system 140 is enabled to monitor the application 152 that the sets of instructions were written for.

In step 540, the method ends.

### MORE INFORMATION ON SCHEMAS

The following describes other possible schemas and content that can be associated with schemas. For example, the following describes various attributes and types that can be associated with various schemas. One of the schemas is a MasterModel, according to an embodiment. Schema elements such as SPIInformation, GraphFiles, Policies, PkgFiles, and Products, according to an embodiment, can be children of the MasterModel schema. GraphFiles is an example of a Graph schema depicted in Figure 4. Policies is an example of a Policy schema. PkgFiles is an example of a packaging schema. SNMPPolicy is an example of an SNMP Schema, ScheduledTaskPolicy is an example of a Scheduling Task Schema depicted in Figure 3. External Metric Collections is an example of a Metric Collection Schema depicted in Figure 2.

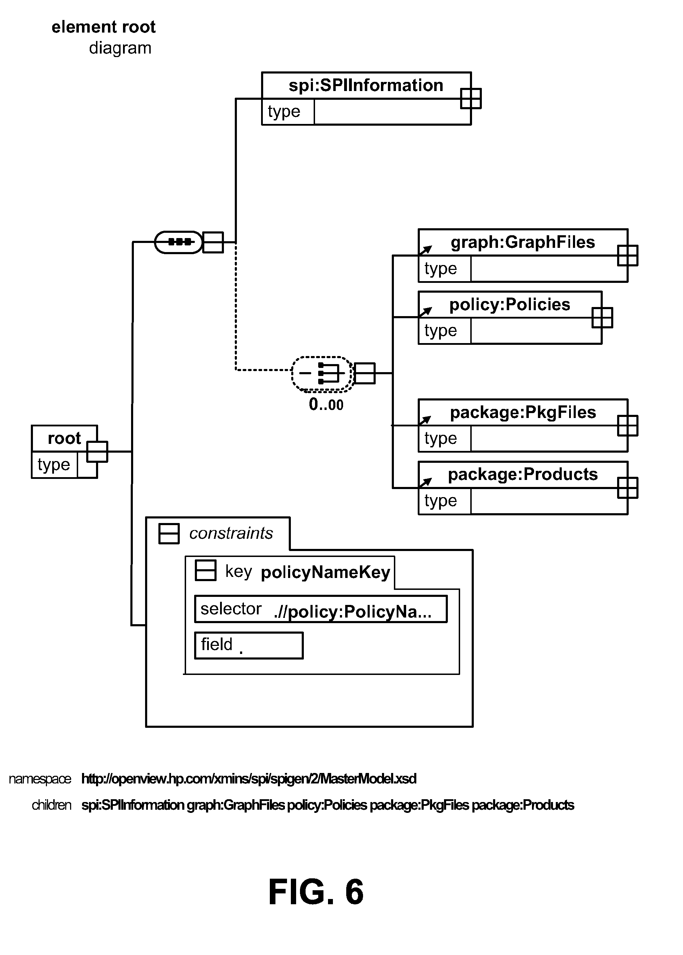

Also refer to Figure 6 which depicts a block diagram of a root schema, according to an embodiment. Referring to Figure 6, according to an embodiment, the root element is used for all policies. According to an embodiment, the SPlInformation is used for SPI artifacts, such as filename prefixes. According to an embodiment, PolicyName is unique within the SPI model and Collection Name is the name of a policy.

### Examples the Application Management Language:

Examples of application management language in accordance with embodiments of the present invention are described in the following paragraphs.

The metric element defines information about the metrics being monitored for an application in accordance with embodiments of the present invention. This information includes, but is not limited to, 1) the metric name and description, 2) the source of the metric, and 3) the unit of measure.

Example of the metric element:

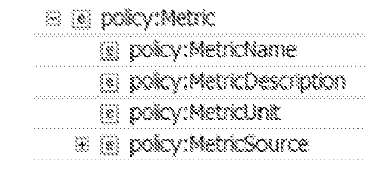

The monitor policy element defines information about monitoring data, such as response time or incoming workload, provided by an application to management systems in accordance with embodiments of the present invention. This information includes, but is not limited to, 1) a policy name and description, 2) the interval at which to monitor the data, 3) the condition to monitor, including a numeric threshold or a script which determines the condition, 4) the metrics to be monitored, 5) the object instances to be monitored, and 6) the actions to perform if an error condition occurs, including the severity of the event and instructions on what to do to fix the problem.

Example of a monitor policy element:

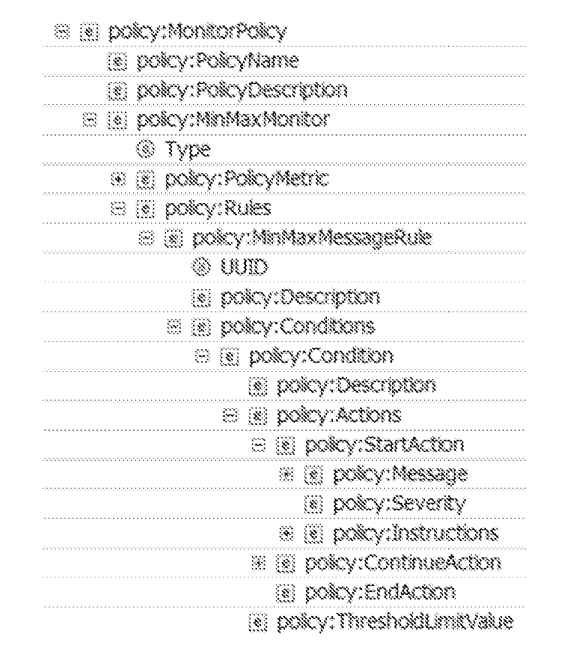

The external collection element defines the information necessary to collect metrics from a collector external to the Installation Management System in accordance with embodiments of the present invention. This information includes, but is not limited to, 1) a policy name and description, 2) the interval at which to collect the data, 3) the command line to run to collect the data, and 4) the user/password required for the collection.

Example of an external collection element:

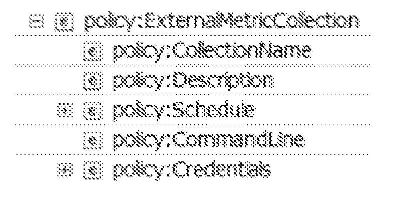

The process monitoring policy element defines information about a process or service to monitor in accordance with embodiments of the present invention. This information includes, but is not limited to, 1) a policy name and description, 2) the interval at which to monitor the process, 3) the process name, and 4) the actions to perform if an error condition occurs, including the severity of the event and instructions on what to do to fix the problem.

Example of a process monitoring policy element:

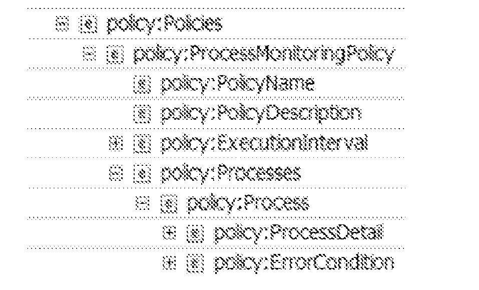

The scheduled task policy element defines information about a scripts or executables to be executed by the management system in accordance with embodiments of the present invention. This information includes, but is not limited to, 1) a policy name and description, 2) the interval at which to perform the execution (defined as a repeating interval or as a specific times or specific days), and 3) messages that should be sent to the operator console upon commencement, success, or failure of the task execution, including the severity of the event and instructions on what to do to fix the problem.

Example of a scheduled task policy element:

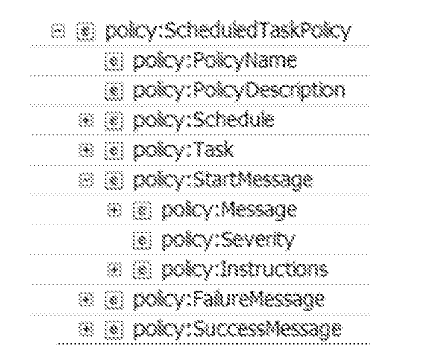

The SNMP policy element defines the SNMP trap from which to collect metrics in accordance with embodiments of the present invention. This information includes, but is not limited to, 1) a policy name and description, 2) the SNMP trap ID and additional SNMP variables that further identify the trap to monitor, 3) a set of rules that specify the state or condition to monitor and the action to take if an error condition is found. This action includes such things as the severity of the condition and instructions on what to do to fix the problem.

Example of a SNMP policy element:

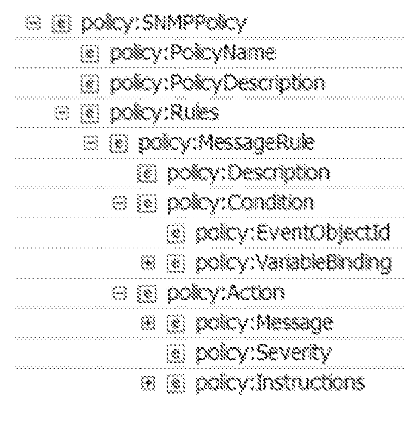

The Logfile element defines information about monitoring an application logfile in accordance with embodiments of the present invention. This information includes, but is not limited to, 1) the policy name and description, 2) the logfile location, and 3) one or more rules that specify a condition for which to monitor (the existence of a text pattern in the logfile) and 3) actions to take if an error condition is found, including such things as the severity of the condition and instructions on what to do to fix the problem.

Example of a logfile element:

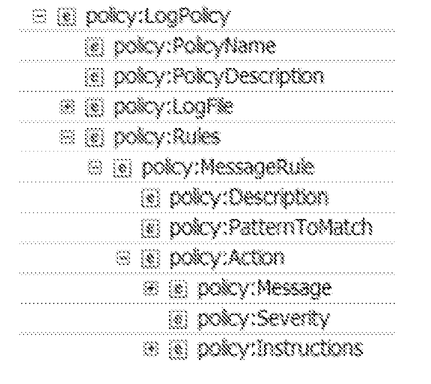

The Graph element defines information about a graph that will display metric values over time for performance analysis in accordance with embodiments of the present invention. This includes, but is not limited to, the following: 1) information used in the display of the graph, such as graph name, description, or axis titles, 2) graph type, chosen from a selection of pre-defined graph patterns, such as a trend graph or comparison graph, and 3) the metrics that will appear on the graph and any instance filter that should be applied.

Example of a graph element:

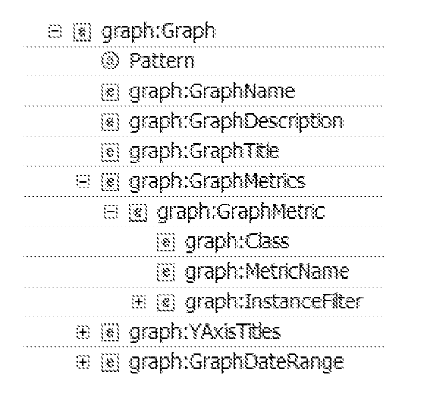

It is appreciated that in many cases the Instruction Analyzer can provide reasonable defaults to alleviate some work on the part of the developer. For example, in SNMP policies, the Instruction Analyzer can provide a standard error message for the developer.

### CONCLUSION

Although many examples of embodiments of the present invention were described in the context of a company's installation, various embodiments apply to installations for any type of organization regardless of whether it is a company or not.

By specifying the content that pertains to managing applications and by hiding implementation specifics of installation management systems, developers are enabled to configure installation management systems without requiring knowledge of the installation management system. By specifying the content that pertains to managing applications and by hiding implementation specifics of the installation management system the instructions that enable the installation management system to manage applications can be used in the event the company decides to switch to a different installation management system. Further, because of various embodiments a developer will be provided a consistent way of configuring installation management systems. By specifying content for configuring a particular aspect of an installation management system in one place, the developer will not have to perform redundant manual configuration activities. Therefore, various embodiments enable developers to quickly and easily create consistent management solutions for different applications.

## Claims

1. A method of managing applications associated with an installation, the method comprising:
receiving instructions that enable an installation management system to determine how to manage an application associated with the installation, wherein the instructions conform to an application modeling language that specifies a definition that can be used to write instructions for more than one application without requiring knowledge of the installation management system; and
analyzing the instructions to enable the installation management system to determine how to manage the application.

2. A method as claimed in Claim 1, wherein the installation management system is a first installation management system and wherein the method further comprises:
receiving the instructions at a second installation management system to determine how to manage the application associated with the installation; and
analyzing the instructions to enable the second installation management system to determine how to manage the application.

3. A method as claimed in Claim 2, wherein the first and second installation management systems are one of different versions of the same product or different products.

4. A method as claimed in any preceding claim, wherein the receiving of the instructions that enable the installation management system to determine how to manage the application associated with the installation and wherein the instructions conform to the application modeling language that specifies the definition further comprises:
receiving the instructions that conform to the application modeling language that specifies the definition, wherein the definition is an Extensible Markup Language (XML) schema.

5. A method as claimed in any preceding claim, wherein the receiving of the instructions that enable the installation management system to determine how to manage the application associated with the installation and wherein the instructions conform to the application modeling language that specifies the definition further comprises:
receiving instructions that conform to the application modeling language that specifies the definition, wherein content for configuring a particular aspect of the application modeling language is specified in a single definition.

6. A method as claimed in any preceding claim, wherein the definition is selected from a group consisting of metric collection, monitor policy, external collection element, process monitoring policy, scheduled task policy, SNMP policy, log file element, graph element, and scheduled task.

7. A computer-usable medium having computer-readable program code embodied therein for providing:
a definition for an application modeling language for writing instructions that enable an installation management system to determine how to manage applications associated with an installation,
wherein the definition can be used to write instructions for more than one application without requiring knowledge of the installation management system.

8. A medium as claimed in Claim 7, wherein the definition is an Extensible Markup Language (XML) schema.

9. A computer-usable medium having computer-readable program code embodied therein for causing a computer system to perform a method as claimed in any of claims 1 to 6.

10. An installation management system for managing an installation, comprising:
means for receiving instructions that enable the installation management system to determine how to manage an application associated with the installation, wherein the instructions conform to an application modeling language that specifies a definition that can be used to write instructions for more than one application without requiring knowledge of the installation management system; and
means for analyzing the instructions to enable the installation management system to determine how to manage the application.
